# EUROPÄISCHE PATENTSCHRIFT

(11) **EP 2 223 311 B1**
(45) Veröffentlichungstag und Bekanntmachung des Hinweises auf die Patenterteilung: **08.06.2016**
(21) Anmeldenummer: 08862694.0
(22) Anmeldetag: 10.12.2008
(51) Int. Cl.: H01B 3/30, C08K 3/36, B32B 5/16, B65G 15/30

(54) **ISOLATIONSMATERIAL MIT LACK UND MATERIALZUSATZ SOWIE ISOLATIONSBAND**
INSULATION MATERIAL HAVING PAINT AND A MATERIAL ADDITIVE, AND INSULATING TAPE
MATÉRIAU D'ISOLATION AVEC DE LA PEINTURE ET UN MATÉRIAU ADDITIF, ET BANDE D'ISOLATION

(30) Priorität: 18.12.2007 DE 102007061587
(43) Veröffentlichungstag der Anmeldung: 01.09.2010
(73) Patentinhaber: ABB AG, 68309 Mannheim (DE)
(72) Erfinder: NELGES, Jörg, 74821 Mosbach (DE)
(86) Internationale Anmeldenummer: PCT/EP2008/010461
(87) Internationale Veröffentlichungsnummer: WO 2009/077111

(56) Entgegenhaltungen:
- EP-A- 0 491 101
- EP-A- 1 067 065
- EP-A- 1 977 982
- KR-B1- 930 008 158

## Beschreibung

Die Erfindung betrifft ein Isolationsband mit einer Schicht Isolationsmaterial auf wenigstens einer der beiden flächigen Seiten.

Es ist allgemein bekannt, dass beim Herstellen von Plastikbeuteln, insbesondere in der Medizintechnik, Hochfrequenzschweißverfahren eingesetzt werden. Hierbei sind mehrere aufeinanderliegende Folienabschnitte mittels einer zumindest teilweise um deren äußere Begrenzung verlaufenden Schweißnaht zu einem Beutel verbunden. Die zu verbindenden Folien werden normalerweise auf Rollen angeliefert und als fortlaufendes Bandmaterial übereinanderliegend auf einem Transportband einer Hochfrequenzschweißvorrichtung zugeführt. Die bandförmigen verschweißten Folienabschnitte werden in einem dem Schweißvorgang nachgeordneten Produktionsschritt entsprechend den geometrischen Abmessungen der die Beutel umgebenen Schweißnähte voneinander getrennt.

Das Hochfrequenzschweißverfahren basiert darauf, dass elektrische Energie in Form eines Funkfrequenzfeldes zu verbindenden Flächen zugeführt wird. Hierdurch werden die Moleküle im Material in Bewegung gebracht. Durch die hierdurch entstehende Reibung zwischen den Molekülen wird die Wärme erzeugt, die zum Verschmelzen des Materials erforderlich ist. Dadurch entsteht eine Schweißnaht von derselben Festigkeit wie das umgebende Material.

Durch das Funktionsprinzip des Hochfrequenzschweißens bedingt erwachsen Anforderungen an das Transportband, welches auch als Untergrund für den Hochfrequenzschweißvorgang dient.

Einerseits muss die Oberfläche des Transportbandes eine bestimmte Oberflächenrauhigkeit aufweisen, um die Schmelze, welche während des Verschweißens der auf dem Transportband befindlichen Folien entsteht, aufzunehmen. Geeignete Rauhigkeitswerte liegen beispielsweise zwischen einer Rauzahl Rz 2,5 und Rz 10. Dies ist zum Erreichen einer hohen Qualität einer Schweißnaht notwendig. Darüber hinaus bestehen Anforderungen an die elektrische Isolationsfähigkeit des Transportbandes.

Als Transportband für derartige Zwecke wird gemäß dem Stand der Technik ein Isolationsband verwendet, welches eine beiderseits mit Pressspan oder einem anderen geeigneten Zellstoffmaterial beschichtete Polyesterfolie umfasst. Die beiden Schichten Pressspan sind darüber hinaus zu deren Fixierung an ihren Außenseiten mit je einer Schicht Glanzlack, insbesondere 2-Komponenten-Glanzlack, überzogen, welche in getrocknetem Zustand zunächst nicht die geforderte Oberflächenrauhigkeit aufweist.

Zur Erreichung der geforderten Oberflächenrauhigkeit der Glanzlackschicht wird diese bei einem Transportband vor dessen erstmaliger Verwendung im Produktionsbetrieb manuell angeschliffen.

Das Patentdokument Dokument KR 930 008 158 B1 offenbart ein Lackmaterial zur Beschichtung bzw. dem Korrosionsschutz einer Stahltafel.

Das Patentdokument EP-A-0491 101 offenbart eine Beschichtungszusammensetzung zur Erzielung einer velours- oder wildlederähnlichen Oberfläche. Diese soll aus optischen Gründen eine gewisse Mattigkeit aufweisen, welche in Verbindung mit ebenfalls vorgesehenen Farbpigmenten eine Oberfläche erzielt, die einer Oberfläche aus echtem Wildleder möglichst nahe kommt.

Das Patentdokument EP-A-1 067 065 offenbart ein Förderband für die Lebensmittelindustrie, insbesondere für Toastanlagen. Die Oberfläche eines derartigen Förderbandes muss einerseits ein Ablösen von viskosem oder klebrigem Material ermöglichen, als auch eine gummiähnliche Oberfläche aufweisen, um ein seitliches Verrutschen der auf dem Transportband transportierten Gegenstände zu vermeiden.

Nachteilig an dieser Vorgehensweise sind der zum Schleifen erforderliche Zeitbedarf sowie die durch einen derartigen manuellen Prozess bedingten hohen Toleranzen der Oberfläche des angeschliffenen Transportbandes.

Ausgehend von diesem Stand der Technik ist es Aufgabe der Erfindung, eine Möglichkeit zur Verbesserung der Oberflächenrauhigkeit eines Isolationsbandes anzugeben, welche einen Anschleifvorgang vermeidet. Fernerhin ist es Aufgabe der Erfindung, ein entsprechendes Isolationsband anzugeben, welches als Transportband verwendbar ist.

Die Aufgabe wird erfindungsgemäß gelöst durch ein Isolationsband mit den Merkmalen des Anspruchs 1.

Demgemäß kennzeichnet sich der Materialzusatz dadurch, dass er Kieselsäure und Polyethylenwachs aufweist, nachfolgend PE-Wachs genannt.

In besonders vorteilhafter Weise wird durch die Kieselsäure die Mikrorauhigkeit der Lackoberfläche erhöht und durch das PE-Wachs ein Anhaften, insbesondere der Schweißnähte, an der Lackoberfläche reduziert.

Erfindungsgemäß wird als Isolationsmaterial ein Isolationsmaterial mit 2-Komponenten Glanzlack sowie dem Materialzusatz Kieselsäure und PE-Wachs verwendet.

In einer bevorzugten Ausführungsform der Erfindung wird als Lackmaterial 2-Komponenten Glanzlack verwendet, wobei der Gewichtsanteil an Kieselsäure 9% bis 14%, und der Gewichtsanteil an PE-Wachs 0,5% bis 4% des Isolationsmaterials in nassem Zustand beträgt. In ausgehärtetem Zustand, d.h. nach Entweichen der flüchtigen Bestandteile des Isolationsmaterials, sind die jeweiligen Anteile entsprechend verändert.

Es hat sich gezeigt, dass dieses Zusammensetzungsverhältnis besonders vorteilhafte Eigenschaften der Lackschicht bezüglich des Einsatzes als Untergrund für das Hochfrequenzschweißen von Folien aufweist.

In besonders vorteilhafter Weise wird hierdurch auch ohne Anschleifvorgang eine definierte Oberflächenrauhigkeit des Isolationsbandes erreicht, welches als Transportband verwendbar ist. Verflüssigtes Kunststoffmaterial, welches beispielsweise während eines Verschweißvorganges von mehreren auf dem Isolationsmaterial befindlichen Kunststofffolien entsteht, kann somit in durch Oberflächenrauhigkeit bedingte Kavitäten oder Ausnehmungen der Oberfläche des Transportbandes eindringen. Wenn der jeweilige Kunststoffbeutel vom Transportband getrennt wird, verbleibt das getrocknete Schmelzenmaterial in Form einer angerauten Oberfläche an der Schweißnaht des Beutels, so dass die durch die Oberflächenrauhigkeit des Transportbandes bedingten Kavitäten oder Ausnehmungen wieder frei sind. Bei einer lediglich einseitig erfolgten Beschichtung des Isolationsbandes mit Isolationsmaterial ist darauf zu achten, dass bei dessen Verwendung als Transportband diejenige Seite mit Isolationsmaterial beschichtet ist, welche als Untergrund für den Hochfrequenzschweißprozess dient. Bevorzugte Ausführungsform ist die beidseitige Beschichtung des Isolationsbandes mit Isolationsmaterial.

In einer weiteren Ausgestaltung der Erfindung weist der Isolationskern eine beidseitig von einer Schicht Zellstoff umgebene Polyesterfolie auf.

Auf diese Weise wird sowohl eine hohe mechanische Festigkeit als auch ein hohes elektrisches Isolationsvermögen des Isolierstoffes erreicht.

Anhand der in den Zeichnungen dargestellten Ausführungsbeispiele sollen die Erfindung, weitere Ausführungsformen und weitere Vorteile näher beschrieben werden.

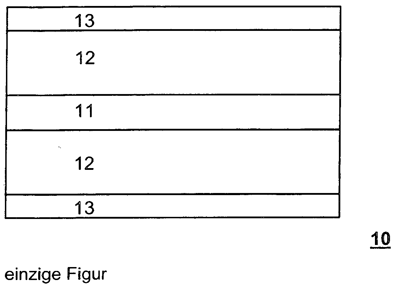

Es zeigt:
einzige Figur: einen beispielhaften mehrschichtigen Aufbau eines Isolationsbandes

Die einzige Figur zeigt einen beispielhaften mehrschichtigen Aufbau eines Isolationsbandes, welches für die Verwendung als Transportband geeignet ist. Um eine innere Schicht Polyesterfolie ist beidseitig jeweils eine Schicht Pressspan aufgebracht. Es ist auch ein Zellstoffmaterial mit vergleichbaren Eigenschaften verwendbar. Die Dicke der Polyesterfolie liegt je nach Anforderungen an die mechanische Festigkeit und die elektrische Isolationsbeständigkeit zwischen ca. 23µm und 100µm. Die Dicke des Pressspanmaterials variiert je nach Anforderungen entsprechend zwischen ca. 100µm und 300 µm. Die beiderseits außen aufgebrachte Schicht Glanzlack weist eine Schichtdicke von ca. 8 µm bis 20 µm im getrockneten Zustand auf. Durch das Verwenden eines Isolationsmaterials mit Glanzlack und einem Materialzusatz von ca. 11,6% eines ersten Gewichtsanteiles Kieselsäure ist eine definierte Oberflächenrauhigkeit der Isolationsmaterialschicht erreicht, ohne dass diese nach Trocknung angeschliffen werden muss. Durch einen weiteren Gewichtsanteil von 1,4% PE-Wachs ist ein Anhaften von weiteren Materialien an der Oberfläche der Isolationsmaterialschicht erschwert. Dies betrifft insbesondere auch ein Anhaften von Schweißnähten an der Oberfläche des Isolationsbandes.

Vorteilhaft ist darüber hinaus, dass die Oberfläche des erfindungsgemäßen Isolationsbandes als matt erscheint. Der Anteil der in den Schweißprozess eingebrachten Energie, welcher durch eine glänzende Oberfläche reflektiert wird, wird deutlich gesenkt und das Schweißverfahren noch effektiver. Eine derart nachteilig glänzende Oberfläche ergibt sich beispielsweise aus der Verwendung von Glanzlack ohne Materialzusatz.

Als 2-Komponenten Glanzlack ist beispielsweise das lösemittelhaltige und auf Polyurethan basierende Produkt GL 3335 / Härter GU106 der Firma DuPont geeignet. Als Material für den Materialzusatz Kieselsäure eignet sich beispielsweise der Typ ,Sylsia 350' oder auch der Typ ,Syloid 244'. Als PE-Wachs geeignet ist beispielsweise mikronisiertes PE-Wachs vom Typ ,DM' oder auch vom Typ ,Luwax AF 30'.

### Bezugszeichenliste

- 10: Isolationsband
- 11: Polyesterfolie
- 12: Pressspanlage
- 13: Isolationsmaterialschicht

## Patentansprüche

1. Isolationsband mit Isolationskern, welcher eine beiderseitig von einer Schicht Zellstoff umgebenen Polyesterfolie umfasst, mit einer Schicht Isolationsmaterial auf wenigstens einer der beiden flächigen Seiten, wobei das Isolationsmaterial einen Lack und einen Materialzusatz aufweist, **dadurch gekennzeichnet, dass** der Materialzusatz Kieselsäure und PE Wachs aufweist.

2. Isolationsband Anspruch 1, **dadurch gekennzeichnet, dass** als Lack 2-Komponenten Glanzlack verwendet wird und/oder dass der Gewichtsanteil der Kieselsäure von 9% bis 14% und der des PE Wachses 0,5% bis 4% PE des Isolationsmaterials beträgt.

## Claims

1. Insulative belt with insulative core which comprises a polyester foil surrounded on both sides by a layer of cellulosic pulp, with a layer of insulation material on at least one of the two sides, the insulation material comprising a lacquer and an added material, **characterized in that** the added material comprises silica and PE wax.

2. Insulative belt according to Claim 1, **characterized in that** the lacquer used comprises 2-component gloss lacquer, and/or the proportion by weight of the silica is from 9% to 14%, and that of the PE wax is from 0.5% to 4% of PE in the insulation material.

## Revendications

1. Bande d'isolation comprenant un noyau d'isolation, qui comprend un film de polyester entouré des deux côtés par une couche de cellulose, comprenant une couche de matériau d'isolation sur au moins l'un des deux côtés plats, le matériau d'isolation présentant un vernis et un additif, **caractérisée en ce que** l'additif présente de l'acide silicique et de la cire de PE.

2. Bande d'isolation selon la revendication 1, **caractérisée en ce que** le vernis utilisé est un vernis brillant à 2 composants et/ou **en ce que** la proportion en poids de l'acide silicique est de 9 % à 14 % et celle de la cire de PE est de 0,5 % à 4 % de PE du matériau d'isolation.
